# EUROPÄISCHE PATENTSCHRIFT

(11) **EP 1 969 712 B1**
(45) Veröffentlichungstag und Bekanntmachung des Hinweises auf die Patenterteilung: **21.06.2017**
(21) Anmeldenummer: 06819571.8
(22) Anmeldetag: 17.11.2006
(51) Int. Cl.: H02P 25/14

(54) **VERFAHREN UND SCHALTUNGSANORDNUNG ZUR DREHZAHLREGELUNG EINES KOMMUTATOR-REIHENSCHLUSSMOTORS**
METHOD AND CIRCUIT FOR REGULATING THE SPEED OF A COMMUTATOR SERIES-WOUND MOTOR
PROCÉDÉ ET ENSEMBLE CIRCUIT PERMETTANT DE RÉGULER LA VITESSE DE ROTATION D'UN MOTEUR SÉRIE À COLLECTEUR

(30) Priorität: 29.12.2005 DE 102005062864
(43) Veröffentlichungstag der Anmeldung: 17.09.2008
(73) Patentinhaber: Robert Bosch GmbH, 70442 Stuttgart (DE)
(72) Erfinder: DENGLER, Klaus, 70806 Kornwestheim (DE); WALTER, Roland, 75233 Tiefenbronn (DE); KLÖR, Bastian, 70176 Stuttgart (DE)
(86) Internationale Anmeldenummer: PCT/EP2006/068596
(87) Internationale Veröffentlichungsnummer: WO 2007/080022

(56) Entgegenhaltungen:
- EP-A- 0 836 269
- EP-A- 1 659 683
- US-A1- 2001 019 660

## Beschreibung

### Stand der Technik

Die Erfindung betrifft ein Verfahren und eine Schaltungsanordnung zur Drehzahlregelung eines Kommutator-Reihenschlussmotors, insbesondere eines Universalmotors, nach der Gattung der übergeordneten Ansprüche 1 und 8.

Derartige Anordnungen sind grundsätzlich bekannt, wobei im Rahmen einer sogenannten UI-Regelung als Eingangsgrößen für die Steuerung des Motors die anliegende Motorspannung und über einen im Laststromkreis angeordneten Shunt der Motorstrom erfasst werden. Eine Drehzahlregelung dieser Art ist beispielsweise in der DE 34 22 458 C2 beschrieben, welche eine Schaltungsanordnung mit einem Triac als Schaltelement und einem niederohmigen Widerstand als Strommesselement im Hauptstromkreis eines Universalmotors zeigt. Diese Anordnung arbeitet grundsätzlich zufriedenstellend, jedoch sind die Kosten der Schaltungsanordnung relativ hoch, bedingt einerseits durch einen niederohmigen Präzisionswiderstand und andererseits durch eine verhältnismäßig teure Schaltungsanordnung zur Aufbereitung und Auswertung des Messsignals für den Motorstrom.

Der Erfindung liegt die Aufgabe zugrunde, ein Verfahren und eine Schaltungsanordnung zur Regelung eines Kommutator-Reihenschlussmotors anzugeben, welche mit reduziertem Schaltungsaufwand eine exakte und preiswerte Drehzahlregelung des Motors erlaubt. Dies wird erreicht durch die kennzeichnenden Merkmale der übergeordneten Patentansprüche, wobei die Erfassung des Motorstromes als Eingangsgröße für die Steuereinheit nicht mehr erforderlich ist. Stattdessen dient der in bekannter Relation zum Motorstrom I stehende Spannungsabfall U_{A} am Anker oder vorzugsweise der leichter erfassbare Spannungsabfall U_{FA} an der Ankerwicklung und an einem Teil der Feldwicklung als weitere Steuergröße bei der Drehzahlregelung des Motors. Die Veränderungen dieser Spannungsabfälle können dann anstelle der in Abhängigkeit von der Belastung des Motors entstehenden Stromänderungen, der Steuereinheit der Anordnung als Regelgrößen zur Verfügung gestellt werden. Die Notwendigkeit einer direkten Erfassung des Motorstromes entfällt.

Als vorteilhaft hat es sich erwiesen, wenn bei einem symmetrisch aufgebauten Universalmotor die Steuereinheit zusätzlich zu dem Signal der Gesamt-Motorspannung ein Signal entsprechend der Summe der Spannungsabfälle am Anker und an einer von zwei gleichen Feldwicklungsteilen erhält. Diese Summenspannung kann am Motor ohne Schwierigkeiten abgegriffen werden, insbesondere dann, wenn man den bekannten und im Wesentlichen konstanten Spannungsabfall am Halbleiterschaltelement des Motors mit erfasst, so dass ein Messpunkt mit festem Bezugspotential direkt auf der mit Masse verbundenen Zuleitung zur Wechselspannungsquelle liegt. Ebenso wird der Gesamt-Spannungsabfall am Motor zweckmäßigerweise unter Einschluss des Spannungsabfalls an dem Halbleiterschaltelement für den Motor direkt an den Zuleitungen zur Wechselspannungsquelle abgegriffen.

Die Erfassung von zur Drehzahlregelung eines Kommutator-Reihenschlussmotors verwendbaren Spannungswerten kann alternativ auch dadurch erfolgen, dass zusätzlich zur Motorgesamtspannung als Ersatzsignal für die Größe des Motorstromes allein der Spannungsabfall am Anker ermittelt wird. Da dieser Spannungsabfall jedoch kein festes Bezugspotential besitzt muss das Messsignal in einem Differenzverstärker aufbereitet werden.

Zur Steigerung der Messgenauigkeit bei der Erfassung der interessierenden Messspannungsänderungen ist es zweckmäßig, wenn diese ohne den unveränderlichen Spannungsanteil der insgesamt am Motor abfallenden Spannung bestimmt werden. Dies wird in besonders einfacher und vorteilhafter Weise dadurch erreicht, dass insbesondere der Messspannung U_{FA} aus der Summe des Spannungsabfalls am Anker und an einem Teil der Feldwicklung eine entgegengerichtete Gleichspannung U_{G} überlagert wird, welche diesen unveränderlichen Spannungsanteil zumindest teilweise kompensiert. Dies kann im einfachsten Fall dadurch geschehen, dass der Messspannung eine konstante Gleichspannung überlagert wird, beispielsweise durch das Einschalten einer Zenerdiode in den Messkreis. Hierdurch wird der Betrag der an der Zenerdiode abfallenden, der Messspannung entgegengerichteten, konstanten Gleichspannung nicht in die der Steuereinheit zugeführte Messspannung einbezogen, so dass der interessierende veränderliche Anteil der Messspannung größer wird. Eine deutliche Verbesserung der Spannungskompensation erhält man noch dadurch, dass die Höhe der der Messspannung überlagerten Gleichspannung entsprechend der erfassten Motorspannung veränderlich gestaltet wird. Dies lässt sich schaltungstechnisch in einfacher Weise durch eine Stromquelle realisieren, indem ein im Messkreis in Reihe mit einem Messwiderstand angeordneter Transistor über einen Port der Steuereinheit entsprechend der anliegenden Motorspannung gesteuert wird. Dies ist im einfachsten Fall ein bipolarer Transistor, der mit seinem Emitter an die mit der Masse der Schaltungsanordnung verbundene Anschlussleitung der Wechselspannungsquelle und mit seinem Kollektor über einen Messwiderstand mit dem von der Masse der Schaltungsanordnung abgewandten Anschluss des Ankers verbunden ist. Hierdurch ist die Höhe der der Messspannung überlagerten Gleichspannung durch die Steuereinheit selbst in besonders zweckmäßiger Weise derart veränderbar, dass nur noch die Änderung der Messspannung am Kollektor des Transistors sichtbar ist.

Weitere Einzelheiten und Ausgestaltungen des erfindungsgemäßen Verfahrens und der zur Durchführung des Verfahrens verwendbaren Schaltungsanordnung ergeben sich aus den Unteransprüchen und aus der Beschreibung des Ausführungsbeispiels.

Die Zeichnung zeigt in
Figur 1 eine erfindungsgemäße Schaltungsanordnung zur Drehzahlregelung eines Kommutator-Reihenschlussmotors, welche ohne Strommessglied allein durch Erfassung geeigneter Messspannungen realisierbar ist, und in
Figur 2 eine Darstellung der am Anker und an einem Teil der Feldwicklung erfassbaren Messspannung U_{FA} als Funktion des Motorstromes I mit einem Kennlinienfeld entsprechend unterschiedlichen Gesamtspannungsabfällen am Motor, und in
Figur 3 eine Darstellung verschiedener Drehzahlkennlinien eines Motors in Abhängigkeit vom Spannungsabfall U_{FA} am Anker und an einem Teil der Feldwicklung bei unterschiedlichen Drehmomenten, beziehungsweise Lastmomenten M₀ bis Mₙ.

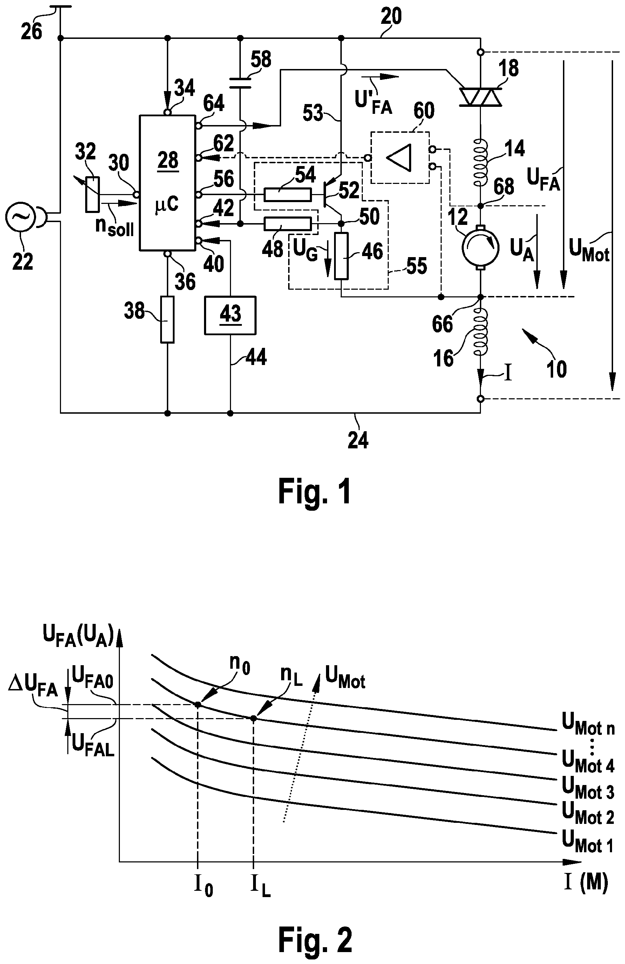

In Figur 1 ist mit 10 ein Universalmotor bezeichnet mit einem Anker 12 und mit zwei gleichen Feldwicklungshälften 14 und 16. Der Motor 10 ist über ein Halbleiterschaltelement in Gestalt eines Triac 18 sowie über eine Leitung 20 mit einem Anschluss einer Wechselspannungsquelle 22 verbunden. Mit seinem anderen Anschluss liegt der Motor 10 über eine Leitung 24 am anderen Pol der Wechselspannungsquelle 22. Die Zuleitung 20 ist weiterhin mit Masse 26 als Bezugspotential für die Schaltungsanordnung verbunden.

Die Steuerung des Motors 10 erfolgt durch eine Steuereinheit in Form eines Mikrocontrollers 28, welcher über einen Eingang 30 und eine als Potentiometer 32 dargestellte Stellvorrichtung ein Drehzahl-Eingangssignal nₛₒₗₗ erhält. Ein Eingang 34 des Mikrocontrollers 28 ist an die Leitung 20 angeschlossen, ein weiterer Anschluss 36 des Mikrocontrollers liegt zur Netzsynchronisation über einen Vorwiderstand 38 von beispielsweise 1 MΩ an der Zuleitung 24 zur Wechselspannungsquelle 22. Die Gleichspannungsversorgung des Mikrocontrollers 28 ist in der Zeichnung nicht dargestellt, sie erfolgt in bekannter Weise durch eine Konstantspannungsquelle von beispielsweise 5 V.

Als Steuergrößen zur Drehzahlregelung des Motors 10 dienen dem Mikrocontroller 28 einerseits der Gesamt-Spannungsabfall am Motor U_{Mot} und andererseits als Ersatzsignal für die Größe des Motorstromes I der Spannungsabfall U_{FA} an der Reihenschaltung aus dem Anker 12, der Feldwicklungshälfte 14 und dem Triac 18 oder wahlweise der Spannungsabfall U_{A} am Anker 12. Bei der Erfassung sowohl des Gesamt-Spannungsabfalls U_{Mot} als auch der Messspannung U_{FA} ist der im Wesentlichen konstante Spannungsabfall von etwa 2 V am Triac 18 mit einbezogen, da der äußere Anschluss des Motors 10 an der Leitung 20 leichter zugänglich ist. Der Spannungsabfall am Triac 18 ist für die Drehzahlbestimmung unbeachtlich.

Der Mikrocontroller 28 erhält die Messspannungen U_{Mot} und U_{FA} einerseits über den Eingang 34 und andererseits über die Eingänge 40 und 42. Hierbei ist das äußere Ende der Feldwicklung 16 über die Leitung 24, eine geeignete Messschaltung oder Messwertaufbereitung 43 und eine Leitung 44 mit dem Eingang 40 des Mikrocontrollers 28 verbunden zur Erfassung des Gesamt-Spannungsabfalls U_{Mot}. Der Spannungsabfall U_{FA} am Anker 12 und an der Feldwicklungshälfte 14 gelangt über Widerstände 46 und 48 vom Anschluss 66 der Ankerwicklung 12 zum Eingang 42 des Mikrocontrollers 28. Hierbei ist ein Verbindungspunkt 50 zwischen den Widerständen 46 und 48 über die Kollektor- und Emitterstrecke eines Transistors 52 sowie über eine Leitung 53 mit der Leitung 20 verbunden. Die Basis des Transistors 52 ist über einen Vorwiderstand 54 an einen Port 56 des Mikrocontrollers 28 angeschlossen. Zusätzlich ist ein Kondensator 58 zwischen die Leitung 20 und den Eingang 42 des Mikrocontrollers 28 geschaltet zur Glättung des Messsignals.

Alternativ zur Erfassung der Messspannung U_{FA} kann als Ersatzsignal für die Größe des Motorstromes I auch die Spannung U_{A} am Anker 12 des Motors 10 erfasst werden, wie dies in Figur 1 mit gestrichelten Linien gezeichnet ist. Hierbei wird die Spannung U_{A} an der Ankerwicklung den Eingängen eines Differenzverstärkers 60 zugeführt, dessen Ausgang an einem Eingang 62 des Mikrocontrollers 28 liegt. Die Ansteuerung des Triac 18 erfolgt über den Ausgang 64 des Mikrocontrollers 28.

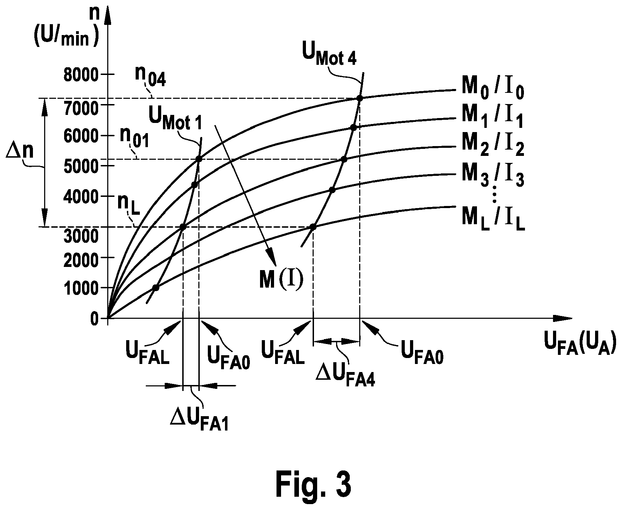

Das erfindungsgemäße Verfahren und die vorgeschlagene Schaltungsanordnung arbeiten folgendermaßen:
Nach dem Anschluss der Wechselspannungsquelle 22 und der Vorgabe eines Drehzahlsollwertes nₛₒₗₗ am Potentiometer 32 wird der Triac 18 durch den Mikrocontroller 28 in den leitfähigen Zustand geschaltet und es fließt ein Motorstrom I über die Wicklung des Ankers 12 und die beiden Feldwicklungshälften 14 und 16. Die insgesamt am Motor 10 abfallende Spannung U_{Mot} einschließlich des Spannungsabfalls am Triac 18 gelangt über die Eingänge 34 und 40 an den Mikrocontroller 28. Außerdem liegt zwischen den Eingängen 34 und 42 ein Spannungssignal entsprechend der Spannung U_{FA}, welche über dem Anker 12, der Feldwicklungshälfte 14 und dem Triac 18 abfällt, reduziert um die Spannungsabfälle an den Widerständen 46 und 48. Die Spannung am Port 56 des Mikrocontrollers 28 ist veränderlich entsprechend dem Gesamtspannungsabfall U_{FA}. Dieses Potential ist niedriger als das Potential auf der Zuleitung 20, so dass sich über den Emitter und die Basis des Transistors 52 ein Steuerstrom ausbildet, welcher einen Strom über die Emitter-Kollektor-Strecke des Transistors 52 und über den Widerstand 46 initiiert. Der durch diesen Strom erzeugte Gleichspannungsabfall U_{G} am Widerstand 46 ist der Messspannung U_{FA} in der für die Steuerung erfassten Halbwelle der Wechselspannung 22 entgegengerichtet und reduziert bei geeigneter Dimensionierung der Widerstände 46 und 48 die Messspannung U_{FA} um deren nicht veränderlichen Anteil (Offset) auf den tatsächlich am Anker 12 und an der Feldwicklungshälfte 14 abfallenden, dem Motorstrom I proportionalen Anteil U_{FA}'. Der Spannungsverlauf und die Abhängigkeit der Spannungshöhe vom Motorstrom I sind anhand der Figuren 2 und 3 näher erläutert.

Der zwischen dem Anschluss 42 am Mikrocontroller 28 und der Zuleitung 20 von der Wechselspannungsquelle 22 angeordnete Kondensator 58 glättet das Messspannungssignal und unterdrückt störende Spannungsspitzen. Hierbei ergibt sich nach der Integration der Messspannung durch den Kondensator 58 eine um den Wert U_{G} (Offset) reduzierte Messspannung U_{FA}' auf dem Spannungsniveau des Mikrocontrollers 28, also im Spannungsbereich bis etwa 5 Volt. Die Messspannung U_{FA}' entspricht dem durch den Triac 18 gesteuerten mittleren Motorstrom und somit dem mittleren inneren Motormoment. Das ungünstige Verhältnis zwischen dem relativ hohen, nicht veränderlichen Anteil von U_{FA} in der Größenordnung von 200 Volt bei einer 220V-Wechselspannungsquelle und dem deutlich niedrigeren Spannungsabfall U_{FA} am Anker 12 und der Feldwicklungshälfte 14 in der Größenordnung von 20-40 Volt wird durch die Subtraktion der entsprechend dem Offset veränderlichen Gleichspannung U_{G} am Widerstand 46 auf den tatsächlich zu erfassenden Anteil U_{FA}' der Messspannung U_{FA} reduziert. Die durch eine gestrichelte Linie umrahmte Baueinheit 55 aus dem Transistor 52 sowie den Widerständen 46 und 54 bewirkt, dass die Höhe der Gleichspannung U_{G} mittels der Steuerung des Transistors 52 durch den Mikrocontroller 28 automatisch korrigiert werden kann. Die Baueinheit 55 arbeitet als Stromquelle, wobei die Stromhöhe durch den Mikrocontroller 28 entsprechend der Gesamtmessspannung U_{FA} einschließlich des Offsets nachgeführt wird. Der Spannungsabfall U_{G} am Widerstand 46 entspricht dem Offset.

Figur 2 zeigt den Verlauf des Messspannungsabfalls U_{FA} in Abhängigkeit vom Motorstrom I und somit auch in Abhängigkeit von dem Moment M, welches der Motors 10 abzugeben vermag. Die verschiedenen, im Wesentlichen parallel verlaufenden Kennlinien der Messspannungen U_{FA} bilden eine Kurvenschar entsprechend den insgesamt am Motor 10 erfassbaren Messspannungen U_{Mot}, wobei die mit ansteigendem Strom I jeweils abfallenden Messspannungen U_{FA} mit zunehmender Motorspannung U_{Mot} höher liegende Kennlinien definieren. Den Verlauf der einzelnen Messspannung U_{FA} bei konstantem Gesamtspannungsabfall U_{Mot} bestimmt der Strom I, welcher sich bei veränderter Motorbelastung einstellt. Ohne Nachregelung ergibt sich also beispielsweise bei der Motorspannung U_{Mot4} aus der Messspannung U_{FA0} der Leerlaufstrom I₀ und aus der Messspannung U_{FAL} der Volllaststrom I_{L}. Die entsprechenden Drehzahlen n₀ bei Leerlauf und n_{L} bei Volllast lassen sich aus der Kurvenschar gemäß Figur 3 entnehmen. Diese liefert für die Messspannungen U_{FA0} und U_{FAL} bei konstanter Motorspannung U_{Mot4} aus den Schnittpunkten mit den Belastungskennlinien M_{L} und M₀, beziehungsweise I_{L} und I₀, die Drehzahlen n₀ bei Leerlauf und n_{L} bei Volllast. Ausgehend von einer Solldrehzahl nₛₒₗₗ kann aus diesem Kennlinienfeld der lastabhängige Drehzahlrückgang bestimmt und entsprechend der sich ergebenden Spannungsdifferenz ΔU_{FA} die notwendige Erhöhung der Motorspannung erkannt werden, welche zur Einhaltung der Drehzahlvorgabe nₛₒₗₗ erforderlich ist.

Die in Figur 1 mit gestrichelten Linien gezeichnete Schaltungsvariante mit dem Differenzverstärker 60 bildet eine Möglichkeit, statt des Spannungsabfalls U_{FA} den Spannungsabfall U_{A} direkt an den Klemmen der Ankerwicklung zu erfassen und als Steuergröße anstelle des Motorstromes I dem Mikrocontroller 28 zuzuführen. Hierbei wird jedoch zusätzlich ein Differenzverstärker 60 benötigt, da kein Bezugspotential zur Verfügung steht. Die Darstellung der Messkurven in den Figuren 2 und 3 gilt grundsätzlich auch für diese Schaltung. In beiden Schaltungsvarianten, also sowohl bei der Erfassung der Messspannung U_{A} allein am Anker wie auch bei Erfassung der Messspannung U_{FA} an der Ankerwicklung und der Feldwicklungshälfte 14 wird der Messung und Regelung jeweils nur eine Halbwelle der Wechselspannungsquelle 22 zugrundegelegt. In der gezeichneten Schaltungsanordnung mit der inneren Masse 26 an der Leitung 20 handelt es sich hierbei um die negative Halbwelle.

Die Kennlinien der Figuren 2 und 3 sind im Mikrocontroller 28 abgelegt. Die Regelung des Triac 18 durch den Mikrocontroller 28 erfolgt dann jeweils entsprechend der gemessenen Spannungsdifferenz ΔU_{FA} zwischen zwei Punkten auf der Kennlinie entsprechend der gemessenen Motorspannung U_{Mot}.

## Patentansprüche

1. Verfahren zur Drehzahlregelung eines Kommutator-Reihenschlussmotors, insbesondere eines Universalmotors (10), welcher aus einer Wechselspannungsquelle (22) über ein in Reihe mit einer Ankerwicklung (12) und einer Feldwicklung (14, 16) geschaltetes, von einer Steuereinheit (28) entsprechend einem Drehzahl-Sollwert (nₛₒₗₗ) gesteuertes Halbleiterschaltelement (18) mit einem Motorstrom (I) versorgt wird, **dadurch gekennzeichnet, dass** der Steuereinheit (28) als Eingangssignale einerseits ein Signal entsprechend eines Gesamt-Spannungsabfalls (U_{Mot}) am Motor (10) bei Stromfluss und andererseits ein Ersatzsignal für die Größe des Motorstromes (I) entsprechend eines Spannungsabfalls (U_{A}, U_{FA}) an der Ankerwicklung (12) allein oder an der Ankerwicklung (12) und an einem Teil (14) der Feldwicklung (14, 16) zugeführt werden, welche in der Steuereinheit (28) mit dort abgelegten motortypischen Kennlinien (U_{A}, U_{FA} = f(I, U_{Mot})) der Spannungen am Erregerfeld (14) und/oder an der Ankerwicklung (12) verglichen werden, um aus den Abweichungen (ΔU_{A}; ΔU_{FA}) Steuersignale für das Halbleiterschaltelement (18) derart zu bilden, dass die Drehzahl geregelt wird,
und wobei das Ersatzsignal für die Größe des Motorstroms in der Weise gebildet wird, dass die Steuereinheit (28) in Abhängigkeit des oben genannten Spannungsfalls (U_{A}, U_{FA}) einen Transistor (52) derart ansteuert, dass die Spannung einer für die Steuerung erfassten Halbwelle der Wechselspannungsquelle (22), mittels des oben genannten Spannungsfalls (U_{A}, U_{FA}), um deren nicht veränderlichen, der Halbwelle entgegen gerichteten, Anteil reduziert wird,
der von dem oben genannten Spannungsfall (U_{A}, U_{FA}) abhängig ist, um den tatsächlich an der Ankerwicklung (12) und dem Teil (14) der Feldwirkung abfallenden Spannungsanteil (U_{FA}') zu erhalten, der dem Motorstrom proportional ist und der daher dem durch das Halbleiterelement (18) gesteuerten, mittleren Motorstrom entspricht, welcher wiederum dem mittleren, inneren Motormoment des Motors (10) entspricht.

2. Verfahren nach Anspruch 1, **dadurch gekennzeichnet, dass** die Steuereinheit (28) zusätzlich zu dem Signal des Gesamt-Spannungsabfalls (U_{Mot}) am Motor (10) ein Signal entsprechend der Summe (U_{FA}) der Spannungsabfälle an der Ankerwicklung (12) und an dem Teil (14) der Feldwicklung (14, 16) erhält.

3. Verfahren nach Anspruch 1, **dadurch gekennzeichnet, dass** der Steuereinheit (28) als Ersatzsignal für die Größe des Motorstromes (I) ein in einem Differenzverstärker (60) verstärktes Signal entsprechend der Größe einer Ankerspannung (U_{A}) zugeführt wird.

4. Verfahren nach einem der vorhergehenden Ansprüche, **dadurch gekennzeichnet, dass** der Messspannung (U_{FA}, U_{A}) eine entgegengerichtete Gleichspannung (U_{G}) überlagert wird.

5. Verfahren nach Anspruch 4, **dadurch gekennzeichnet, dass** die Größe der den Spannungsabfall (U_{FA}, U_{A}) überlagerten Gleichspannung (U_{G}) entsprechend der Änderung des Spannungsabfalls (U_{FA}, UA) veränderbar ist.

6. Verfahren nach Anspruch 4 oder 5, **dadurch gekennzeichnet, dass** die Größe der den Spannungsabfall (U_{FA}, U_{A}) überlagerten Gleichspannung (U_{G}) durch die Steuereinheit (28) selbst veränderbar ist.

7. Schaltungsanordnung zur Drehzahlregelung eines Kommutator-Reihenschlussmotors, insbesondere eines Universalmotors(10), welcher aus einer Wechselspannungsquelle (22) über ein in Reihe mit einer Ankerwicklung (12) und einer Feldwicklung (14, 16) geschaltetes, von einer Steuereinheit (28) entsprechend einem Drehzahl-Sollwert (n_{Soll}) gesteuertes Halbleiterschaltelement (18) mit einem Motor-strom (I) versorgt wird, angepasst zur Durchführung des Verfahrens nach einem der Ansprüche 1 bis 6, **dadurch gekennzeichnet, dass** die Steuereinheit (28) zur Erfassung eines Spannungsabfalls (U_{A}, U_{FA}) an der Ankerwicklung (12) allein oder an der Ankerwicklung (12) und an einem Teil (14) der Feldwicklung (14, 16) mit einem ersten Eingang (34) an eine mit Masse (26) verbundene Anschlussleitung (20) der Wechselspannungsquelle (22), mit einem zweiten Eingang (40) über eine Schaltung zur Messwertaufbereitung (43) an eine zweite Anschlussleitung (24) der Wechselspannungsquelle (22) und mit einem dritten Eingang (42) an einen von Masse (26) abgewandten Anschluss (66) der Ankerwicklung (12) angeschlossen ist und dass die Steuereinheit (28) zur Reduzierung des Spannungsabfalls (U_{A}, U_{FA}) mit einem weiteren Port (56) an der Basis eines Transistors (52) angeschlossen ist.

8. Schaltungsanordnung nach Anspruch 7, **dadurch gekennzeichnet, dass** der dritte Eingang (42) der Steuereinheit (28) über eine entgegengesetzt zum Spannungsabfall (U_{FA}) gepolte Hilfsspannungsquelle (46, 52, 54) zur Erzeugung einer Hilfsspannung (U_{G}) mit dem Anschluss (66) am Anker (12) verbunden ist.

9. Schaltungsanordnung nach Anspruch 8, **dadurch gekennzeichnet, dass** die Hilfsspannungsquelle (46, 52, 54) als gesteuerte Gleichspannungsquelle (46, 52, 54) ausgebildet ist.

10. Schaltungsanordnung nach Anspruch 9, **dadurch gekennzeichnet, dass** die Hilfsspannungsquelle (46, 52, 54) den über den weiteren Port (56) der Steuereinheit (28) entsprechend der Veränderung der Motorspannung (U_{Mot}) gesteuerten Transistor (52) aufweist, der mit seiner Laststrecke über einen Vorwiderstand (46) zwischen der mit Masse (26) verbundenen Anschlussleitung (20) der Wechselspannungsquelle (22) und dem hiervon abgewandten Anschluss (66) der Ankerwicklung (12) angeordnet ist.

## Claims

1. Method for regulating the speed of a commutator series-wound motor, in particular a universal motor (10), which is supplied with a motor current (I) from an AC voltage source (22) by means of a semiconductor switching element (18) that is connected in series with an armature winding (12) and a field winding (14, 16) and that is controlled by a control unit (28) in accordance with a speed setpoint value (nₛₑₜ), **characterized in that**, on the one hand, a signal corresponding to a total voltage drop (U_{Mot}) across the motor (10) when current is flowing and, on the other hand, a substitute signal for the magnitude of the motor current (I) corresponding to a voltage drop (U_{A}, U_{FA}) across the armature winding (12) alone or across the armature winding (12) and across a portion (14) of the field winding (14, 16) are fed as input signals to the control unit (28), which input signals are compared in the control unit (28) with motor-typical characteristic curves (U_{A}, U_{FA} = f(I, U_{Mot})), stored in said control unit, of the voltages across the excitation field (14) and/or across the armature winding (12) in order to form control signals for the semiconductor switching element (18) from the differences (ΔU_{A}; ΔU_{FA}) in such a way that the speed is regulated, and wherein the substitute signal for the magnitude of the motor current is formed in such a way that the control unit (28) drives a transistor (52) depending on the abovementioned voltage drop (U_{A}, U_{FA}) in such a way that the voltage of a half-cycle of the AC voltage source (22) that is detected for the control, is reduced, by means of the abovementioned voltage drop (U_{A}, U_{FA}) by the unfluctuating component of said voltage, said component opposing the half-cycle and being dependent on the abovementioned voltage drop (U_{A}, U_{FA}), in order to obtain the voltage component (U_{FA}') that is actually dropped across the armature winding (12) and the portion (14) of the field winding, said voltage component being proportional to the motor current and therefore corresponding to the average motor current controlled by the semiconductor switching element (18), which in turn corresponds to the average internal motor torque of the motor (10).

2. Method according to Claim 1, **characterized in that**, in addition to the signal of the total voltage drop (U_{Mot}) across the motor (10), the control unit (28) receives a signal corresponding to the sum (U_{FA}) of the voltage drops across the armature winding (12) and across the portion (14) of the field winding (14, 16).

3. Method according to Claim 1, **characterized in that** a signal that is amplified in a differential amplifier (60) and corresponds to the magnitude of an armature voltage (U_{A}) is fed to the control unit (28) as substitute signal for the magnitude of the motor current (I).

4. Method according to one of the preceding claims, **characterized in that** an opposing DC voltage (U_{G}) is superposed on the measurement voltage (U_{FA}, U_{A}).

5. Method according to Claim 4, **characterized in that** the magnitude of the DC voltage (U_{G}) that is superposed on the voltage drop (U_{FA}, U_{A}) is variable in accordance with the change in the voltage drop (U_{FA}, U_{A}).

6. Method according to Claim 4 or 5, **characterized in that** the magnitude of the DC voltage (U_{G}) that is superposed on the voltage drop (U_{FA}, U_{A}) is variable by the control unit (28) itself.

7. Circuit arrangement for regulating the speed of a commutator series-wound motor, in particular a universal motor (10), which is supplied with a motor current (I) from an AC voltage source (22) by means of a semiconductor switching element (18) that is connected in series with an armature winding (12) and a field winding (14, 16) and that is controlled by a control unit (28) in accordance with a speed setpoint value (nₛₑₜ), adapted to carry out the method according to one of Claims 1 to 6, **characterized in that**, in order to detect a voltage drop (U_{A}, U_{FA}) across the armature winding (12) alone or across the armature winding (12) and a portion (14) of the field winding (14, 16), the control unit (28) has a first input (34) connected to a connecting line (20), which is connected to earth (26), of the AC voltage source (22), has a second input (40) connected to a second connecting line (24) of the AC voltage source (22) via a circuit for measurement value processing (43) and has a third input (42) connected to a terminal (66), which is remote from earth (26), of the armature winding (12) and **in that** the control unit (28) has a further port (56) connected to the base of a transistor (52) in order to reduce the voltage drop (U_{A}, U_{FA}).

8. Circuit arrangement according to Claim 7, **characterized in that** the third input (42) of the control unit (28) is connected to the terminal (66) on the armature (12) via an auxiliary voltage source (46, 52, 54) for generating an auxiliary voltage (U_{G}), said auxiliary voltage source having the opposite polarity to the voltage drop (U_{FA}).

9. Circuit arrangement according to Claim 8, **characterized in that** the auxiliary voltage source (46, 52, 54) is in the form of a controlled DC voltage source (46, 52, 54).

10. Circuit arrangement according to Claim 9, **characterized in that** the auxiliary voltage source (46, 52, 54) has the transistor (52) that is controlled in accordance with the change in motor voltage (U_{Mot}) by means of the further port (56) of the control unit (28), said transistor being arranged with its load path via a series resistor (46) between the connecting line (20), which is connected to earth (26), of the AC voltage source (22) and the terminal (66), which is remote therefrom, of the armature winding (12).

## Revendications

1. Procédé permettant de réguler la vitesse de rotation d'un moteur série à commutateur, notamment d'un moteur universel (10), alimenté avec un courant de moteur (I) à partir d'une source de tension alternative (22) par l'intermédiaire d'un élément de commutation à semi-conducteur (18), monté en série avec un enroulement d'induit (12) et un enroulement de champ (14, 16), et commandé par une unité de commande (28) en fonction d'une valeur de consigne de vitesse de rotation (nₛₒₗₗ), **caractérisé en ce que** l'unité de commande (28) obtient, en tant que signaux d'entrée, d'une part, un signal correspondant à une chute de tension totale (U_{Mot}) lorsque le moteur (10) est alimenté en courant et, d'autre part, un signal de substitution pour la valeur du courant de moteur (I) correspondant à une chute de tension (U_{A}, U_{FA}) sur l'induit (12) seul ou sur l'induit (12) et sur une partie (14) de l'enroulement de champ (14, 16), lesquels signaux d'entrée sont comparés dans l'unité de commande (28) à des courbes caractéristiques (U_{A}, U_{FA} = f(I, U_{Mot})) qui y sont stockées et typiques du moteur, des tensions sur le champ d'excitation (14) et/ou sur l'enroulement d'induit (12) afin de former des signaux de commande pour l'élément de commutation à semi-conducteur (18) à partir des écarts (ΔU_{A} ; ΔU_{FA}) de manière à réguler la vitesse de rotation, et dans lequel le signal de substitution pour la valeur du courant de moteur est déterminée de manière à ce que l'unité de commande (28) commande un transistor (52) en fonction de la chute de tension précitée (U_{A}, U_{FA}) de manière à réduire la tension d'une demi-onde de la source de tension alternative (22), détectée pour la commande au moyen de la chute de tension précitée (U_{A}, U_{FA}), d'une valeur qui est égale à la partie de celle-ci qui n'est pas variable et qui est dirigée en sens opposé à la demi-onde, et qui dépend de la chute de tension (U_{A}, U_{FA}) précitée afin d'obtenir la partie de tension (U_{FA}') s'abaissant effectivement au niveau de l'enroulement d'induit (12) et de la partie (14) de l'enroulement de champ, laquelle partie est proportionnelle au courant de moteur et correspond par conséquent au courant de moteur moyen commandé par l'élément à semi-conducteur (18), qui correspond quant à lui au couple moteur moyen interne du moteur (10).

2. Procédé selon la revendication 1, **caractérisé en ce que** l'unité de commande (28) obtient, en plus du signal de la chute de tension totale (U_{Mot}) du moteur (10), un signal correspondant à la somme (U_{FA}) des chutes de tension sur l'enroulement d'induit (12) et sur la partie (14) de l'enroulement de champ (14, 16).

3. Procédé selon la revendication 1, **caractérisé en ce que** l'unité de commande (28) reçoit, en tant que signal de substitution pour la valeur du courant moteur (I), un signal amplifié dans un amplificateur différentiel (60) en fonction de l'amplitude de la tension d'induit (U_{A}).

4. Procédé selon l'une quelconque des revendications précédentes, **caractérisé en ce qu'**une tension continue (U_{G}) opposée est superposée à la tension de mesure (U_{FA}, U_{A}).

5. Procédé selon la revendication 4, **caractérisé en ce que** la valeur de la tension continue (U_{G}) superposée à la chute de tension (U_{FA}, U_{A}) peut être modifiée en fonction de la variation de la chute de tension (U_{FA}, U_{A}).

6. Procédé selon la revendication 4 ou 5, **caractérisé en ce que** la valeur de la tension continue (U_{G}) superposée à la chute de tension (U_{FA}, U_{A}) peut elle-même être modifiée par l'unité de commande (28).

7. Système de circuit destiné à la régulation de la vitesse de rotation d'un moteur série à commutateur, notamment d'un moteur universel (10), alimenté par un courant de moteur (I) à partir d'une source de tension alternative (22) par l'intermédiaire d'un élément de commutation à semi-conducteur (18), et monté en série avec un enroulement d'induit (12) et un enroulement de champ (14, 16), commandé par une unité de commande (28) en fonction d'une valeur de consigne de vitesse de rotation (nₛₒₗₗ), apte à mettre en oeuvre le procédé selon l'une quelconque des revendications 1 à 6, **caractérisé en ce que** l'unité de commande (28), pour détecter une chute de tension (U_{A}, U_{FA}) sur l'enroulement d'induit (12) seul ou sur l'enroulement d'induit (12) et sur une partie (14) de l'enroulement de champ (14, 16), est connectée à une première entrée (34) au niveau d'une ligne de raccordement (20) de la source de tension alternative (22) connectée à la masse (26), à une deuxième entrée (40) par l'intermédiaire d'un circuit de traitement de mesure (43) au niveau d'une deuxième ligne de raccordement (24) de la source de tension alternative (22) et à une troisième entrée (42) au niveau d'une borne (66) opposée à la masse (26) de l'enroulement d'induit (12) et **en ce que** l'unité de commande (28) est connectée à un autre port (56) au niveau de la base d'un transistor (52) pour réduire la chute de tension (U_{A}, U_{FA}).

8. Système de circuit selon la revendication 7, **caractérisé en ce que** la troisième entrée (42) de l'unité de commande (28) est reliée, par l'intermédiaire d'une source de tension auxiliaire (46, 52, 54) polarisée en sens opposé à la chute de tension (U_{FA}), à la borne (66) au niveau de l'induit (12) pour générer une tension auxiliaire (U_{G}).

9. Système de circuit selon la revendication 8, **caractérisé en ce que** la source de tension auxiliaire (46, 52, 54) est réalisée sous la forme d'une source de tension continue commandée (46, 52, 54).

10. Système de circuit selon la revendication 9, **caractérisé en ce que** la source de tension auxiliaire (46, 52, 54) comporte le transistor (52) commandé par l'intermédiaire de l'autre port (56) de l'unité de commande (28) en fonction de la variation de la tension de moteur (U_{Mot}), lequel transistor est disposé de manière à ce que sa section de charge soit disposée aux bornes d'une résistance série (46) entre la ligne de raccordement (20) de la source de tension alternative (22), reliée à la masse (26), et la borne (66), opposée à celle-ci, de l'enroulement d'induit (12).
